# EUROPÄISCHE PATENTSCHRIFT

(11) **EP 2 320 100 B1**
(45) Veröffentlichungstag und Bekanntmachung des Hinweises auf die Patenterteilung: **19.09.2012**
(21) Anmeldenummer: 10169361.2
(22) Anmeldetag: 13.07.2010
(51) Int. Cl.: F16C 7/06, F16B 7/06

(54) **Zug-Druck-Stange**
Traction-pressure rod
Barre de traction-compression

(30) Priorität: 10.11.2009 AT 17812009
(43) Veröffentlichungstag der Anmeldung: 11.05.2011
(73) Patentinhaber: RO-RA Produktions GmbH, 4862 Schörfling a. Attersee (AT)
(72) Erfinder: Haller, Matthias, 4860, Lenzing (AT)
(74) Vertreter: Lösch, Christoph Ludwig Klaus

(56) Entgegenhaltungen:
- EP-A2- 1 588 975
- DE-A1-102008 013 017
- FR-A- 460 408
- GB-A- 524 717
- US-A- 2 352 585
- US-A- 2 810 595
- US-B1- 6 902 342

## Beschreibung

### BESCHREIBUNG

Die Erfindung betrifft eine Zug-Druck-Stange, wie diese im Anspruch 1 beschrieben ist.

Aus der GB 0 524 717 A ist eine Zug-Druck-Stange bekannt geworden, welche gemäß der Darstellung in der Fig. 3 ein zentrales Mittelteil mit Innengewinden aufweist und von beiden in Axialrichtung voneinander distanzierten Enden jeweils ein Gewindeschaft mit einem daran angeordneten und damit verbundenen Kupplungselement eingeschraubt ist. Die jeweils zusammenwirkenden Gewindeanordnungen sind einmal als Links- und einmal als Rechtsgewinde ausgebildet. Zusätzlich ist der zentrale Mittelteil jeweils von einer an den Kupplungselementen angeordneten, rohrförmigen Hülse bereichsweise umgeben, um so einen Zutritt von Schmutz oder Verunreinigungen hin zu den Gewindeanordnungen zu vermeiden. An jedem der beiden Schaftenden ist eine eigene Rastvorrichtung vorgesehen, welche ihrerseits in Axialrichtung gesehen, jeweils einander zugewendete sowie zusammenwirkende erste und zweite Rastelemente sowie ein Federelement umfasst. Das Federelement ist am Schaftende an einer eigens zu montierenden Scheibe abgestützt und drückt die beiden Rastelemente in Axialrichtung gegeneinander. Die Rastelemente sind hier durch in Axialrichtung aufeinander zugerichtete Zähne gebildet. Das erste Rastelemente ist einstückig mit dem Schaft ausgebildet und das zweite Element ist drehfest mit dem zentralen Mittelteil gekuppelt. Dazu weist dieser eine sich in Axialrichtung erstreckende Nut auf, in welche ein am Rastelement angeordneter Kulissenstein eingreift.

Eine andere als Abhängeelement ausgebildete Zug-Druck-Stange ist aus der EP 1 588 975 A2 bekannt geworden. Dieses Abhängeelement umfasst zwei Befestigungselemente, welche jeweils einen Schaft aufweisen, wobei wenigstens ein Schaft ein Gewinde aufweist. Weiters umfasst das Abhängeelement ein Mittelelement, welches in wenigstens einer der Stirnflächen eine Gewindehülse aufweist und in welche an den sich gegenüberliegenden Stirnflächen die Befestigungselemente eingreifen. Wenigstens einer der Schafte, welche ein Gewinde aufweisen, ist an seiner Stirnfläche mit einer Zahnscheibe mit radial verlaufenden Zähnen versehen, welche in auf der Stirnfläche der Gegenzahnscheibe angeordnete radial verlaufende Zähne eingreifen. Die Gegenzahnscheibe ist an ihrer Rückfläche mit einem Federelement beaufschlagt. Zur gegenseitigen Verdrehsicherung der beiden Zahnscheiben ist im Mittelelement eine eigene Führungshülse eingesetzt, welche eine axiale Durchgangsöffnung mit der Innenkontur eines Mehrkants aufweist. An der Rückfläche der Gegenzahnscheibe ist weiters ein Mehrkantschaft angeordnet, wobei dieser in die axiale Durchgangsöffnung der Führungshülse eingreift und in dieser verschiebbar ist.

Das Dokument US 2 810 595 A zeigt die Merkmale des Oberbegriffs von Anspruch 1.

Eine andere Zug-Druck-Stange ist aus der WO 2006/042750 A1 bekannt geworden. Die Druckstange umfasst einen zentralen Körper mit mindestens einem Adapter zur Montage der Zug-Druck-Stange, wobei der Adapter zur Längenveränderung der Zug-Druck-Stange über eine Gewindeanordnung drehbar mit dem Körper verbunden ist. Weiters ist eine Rasteinrichtung vorgesehen, die die Drehbewegung in der Weise beaufschlagt, dass sie in einer Mehrzahl von Drehstellungen mit einer vorbestimmbaren Verriegelungskraft lösbar arretiert. Die Rasteinrichtung weist zwei Rastelemente auf, wobei das erste Rastelement an dem Adapter und das zweite Rastelement an dem Körper angeordnet ist. Das erste Rastelement weist mindestens eine Rastnase auf, mit der es zur Arretierung der Rasteinrichtung in das zweite Rastelement eingreift. Das zweite Rastelement ist als Zahnkranz ausgebildet, in welchen das erste Rastelement mit seiner Rastnase federnd eingreift und auf dieses eine Kraft ausübt.

Der vorliegenden Erfindung liegt die Aufgabe zugrunde, eine Zug-Druck-Stange in kompakter, einfacher Modulbauweise zu schaffen, die ohne Zuhilfenahme von Werkzeug zu bedienen ist und eine unbeabsichtigte Längenänderung in deren eingebauten Zustand verhindert ist.

Diese Aufgabe der Erfindung wird durch die Merkmale des Anspruches 1 gelöst. Der sich durch die Merkmale des Anspruches 1 ergebende Vorteil liegt darin, dass durch die kompakte Baueinheit aus der Befestigungsvorrichtung, dem Anschlussstück sowie der dazwischen angeordneten Rastvorrichtung nicht nur eine in Axialrichtung erfolgende Gegeneinanderverspannung der beiden Rastelemente erzielt wird, sondern darüber hinaus auch noch durch die Abstützung des Federelements an der Stützschulter des Anschlussstücks eine gegenseitige Verspannung der beiden zusammenwirkenden Gewinde zwischen dem Schaft der Befestigungsvorrichtung und dem Anschlussstück erzielbar ist. So können dadurch in Axialrichtung wechselnde Belastungen auf die Zug-Druck-Stange bei entsprechender Wahl der Federkraft und die damit verbundenen Geräuschentwicklungen sowie unangenehmes Klopfen bzw. Schlagen vermieden werden. Weiters wird durch die lose Anordnung des Federelements sowie zumindest eines der beiden zusammenwirkenden Rastelemente am Schaft der Befestigungsvorrichtung eine ohne zusätzliche Werkzeuge zu fügende Baugruppe geschaffen, bei der lediglich das Anschlussstück zur Aufnahme des Schaftgewindes mit der Befestigungsvorrichtung nach Auffädeln zumindest eines Rastelementes sowie des Federelements zusammengebaut werden kann. Damit wird auch die Möglichkeit geschaffen, bei starker Abnützung oder einem Federbruch rasch und ohne Zuhilfenahme von zusätzlichen Werkzeugen die beschädigten bzw. abgenützten Bauteile zu erneuern.

In einer weiteren vorteilhaften Ausführungsform bilden das Anschlussstück, die erste Befestigungsvorrichtung sowie die Rastvorrichtung eine gemeinsame zusammengehörige Baugruppe aus. Dadurch kann eine vormontierte, zusammengehörige Baugruppe geschaffen werden, welche je nach weiteren Anwendungsfall beliebig mit anderen Bauelementen kombinierbar ist. Damit kann eine Bauteilgruppe geschaffen werden, an welche in einem Fall direkt eine weitere Befestigungsvorrichtung oder im anderen Fall ein zusätzliches Mittelteil bzw. Mittelstück damit verbunden werden. Dadurch wird ein modularer Aufbau geschaffen, welcher bei geringer Lagerhaltung eine hohe Flexibilität ermöglicht.

In einer vorteilhaften Ausführungsform ist ein Gewinde der Gewindeanordnung zumindest an einem vom Kupplungselement distanzierten Endabschnitt des Schaftes sowie ein weiteres Gewinde an der von der Rastvorrichtung abgewendeten Seite der Stützschulter im Anschlussstück ausgebildet und die Rastvorrichtung ist zwischen der Stützschulter und dem Kupplungselement angeordnet. Diese Ausführungsform ist vorteilhaft, da so ohne zusätzliche Bauteile die Rastelemente über das Federelement aneinander gedrückt werden können, ohne dass dabei ein zusätzlicher Montageaufwand von Nöten ist. Je nach Wahl der Länge des Federelements kann dieses gemeinsam mit dem oder den Rastelementen auf den Schaft aufgefädelt werden und in weiterer Folge lediglich der Schaft mit dem im Anschlussstück vorgesehenen Gewinde verschraubt werden.

In einer weiteren vorteilhaften Ausbildung ist das Gewinde des Schaftes als Außengewinde und das Gewinde des Anschlussstücks als Innengewinde ausgebildet. Durch diese Ausbildung ist es möglich, mit geringstem Platzaufwand eine kompakte Baueinheit zu schaffen und trotzdem eine gegenseitige Verstellung zwischen dem Anschlussstück und der Befestigungsvorrichtung zu ermöglichen.

Vorteilhaft ist auch eine Ausbildung nach Anspruch 2, da so mit relativ kurzen Baulängen der Anschluss einer weiteren Befestigungsvorrichtung ermöglicht wird, wobei dann ein in Axialrichtung gesehen, gegenseitiges Überlappen der beiden Gewindeanordnungen zu einer zusätzlichen Bauteilverkürzung führt.

Gemäß einer Ausbildung, wie im Anspruch 3 beschrieben, wird so im Bereich des Anschlussstücks in überlappender Weise die gegenseitige Kupplung der Befestigungsvorrichtung mit dem Anschlussstück geschaffen. So kann auch bei einem ausreichend langem Verstellweg eine relativ kurze, gesamte Baulänge erzielt werden.

In einer weiteren vorteilhaften Ausführungsform ist eines der beiden Gewinde des Anschlussstücks zur Verbindung mit einer der beiden Befestigungsvorrichtungen als Rechtsgewinde und das andere Gewinde als Linksgewinde ausgebildet. Dabei erweist sich diese Ausgestaltung als besonders vorteilhaft, weil dadurch auf einfache Art und Weise in kürzester Axialerstreckung eine zueinander gegensinnige Verlagerung der beiden Befestigungsvorrichtungen relativ gegenüber dem Anschlussstück erzielbar ist.

Erfindungsgemäß weist das Anschlussstück auf seiner dem Kupplungselement abgewandten Seite einen Aufnahmeraum, der an dessen dem Kupplungselement abgewandten Seite durch eine als Stützring ausgebildete Stützschulter zur Abstützung des ersten Endes des Federelements begrenzt wird, zur Aufnahme der Rastvorrichtung auf. Dadurch wird ein Schutz der Rastvorrichtung vor Verschmutzung erzielt, wobei zusätzlich noch eine gegenseitige Arretierung zwischen einem Rastelement und dem Anschlussstück möglich wird. Außerdem kann dadurch Platz für die Betätigung des Anschlussstücks oder aber auch für die Halterung von zusätzlichen Sicherungselementen oder dergleichen geschaffen werden.

Gemäß der vorteilhaften Ausführungsform nach Anspruch 4 weist der Schaft auf seiner dem Kupplungselement abgewandten Seite einen profilierten Schaftfortsatz auf, durch dessen Profilierung das zweite Rastelement drehfest und axial verschiebbar am Anschlussstück gelagert ist. Auf diese Weise ist eine sichere und einfach herzustellende verdrehsichere Lagerung unter gleichzeitiger Verschiebbarkeit des zweiten Rastelements entlang der axialen Richtung des Schaftes möglich.

In der weiteren vorteilhaften Ausführungsform nach Anspruch 5 durchragt der Schaft, insbesondere der profilierte Schaftfortsatz, den Aufnahmeraum des Anschlussstücks und an dessen Schaftende ist zumindest ein radial vorragendes Anschlagelement angeordnet. Dadurch ist eine stabile Führung des zweiten Rastelements und/oder des Federelements möglich.

Gemäß der in Anspruch 6 beschriebenen vorteilhaften Ausführungsform ist das erste Rastelement einstückig mit dem Anschlussstück, insbesondere als innenliegender Wellenabsatz, ausgebildet. Auf diese Weise kann das erste Rastelement besonders sicher drehfest mit dem Anschlussstück verbunden sein. Außerdem wird die Montagefreundlichkeit der Zug-Druck-Stange aufgrund der verringerten Teileanzahl erhöht.

In der in Anspruch 7 beschriebenen vorteilhaften Ausführungsform ist der Stützring durch eine Klebe- oder Schnappverbindung mit dem dem Kupplungselement abgewandten axialen Endbereich des Anschlussstückes verbunden. Dadurch ist eine besonders zuverlässige und montagefreundliche Verbindung des Kupplungselements mit dem Stützring möglich.

In der in Anspruch 8 beschriebenen vorteilhaften Ausführungsform besitzt die Zug-Druck-Stange einen an das Kupplungselement anbringbaren Schnappbolzen, welcher einen metallischen Stift sowie einen jeweils aus Kunststoff, insbesondere Polyamid, bestehenden Hebelarm und Schnappring aufweist. Der Schnappbolzen kann zur Sicherung der Verbindung mit dem Stift in die Ösen des Kupplungselementes und mit dem Schnappring um das Anschlussstück angebracht werden. Die Gestaltung als Zweikomponenten-Bauteil (Metall und Kunststoff) ermöglich zum einen zuverlässigen, haltbaren Bolzen und gleichzeitig einen Schnappring mit guten Federeigenschaften.

In der in Anspruch 9 beschriebenen vorteilhaften Ausführungsform weist der Stift an einem seiner axialen Endbereiche eine Hinterschneidung und eine Abflachung auf. Auf diese Weise ist eine besonders sichere und verdrehfeste Verbindung zwischen Stift und Hebelarm möglich.

Zum besseren Verständnis der Erfindung wird diese anhand der nachfolgenden Figuren näher erläutert.

Es zeigen jeweils in stark schematisch vereinfachter Darstellung:
Fig. 1 eine erste mögliche Ausbildung einer nicht erfindungsgemäßen Zug-Druck-Stange, in schaubildlicher Darstellung;
Fig. 2 die Zug-Druck-Stange nach Fig. 1 in Art einer Explosionsdarstellung mit deren Einzelteilen in voneinander getrennter Position, in schaubildlicher Darstellung;
Fig. 3 die Zug-Druck-Stange nach den Fig. 1 und 2, im Axialschnitt;
Fig. 4 die Zug-Druck-Stange in Ansicht geschnitten, gemäß den Linien IV-IV in Fig.3;
Fig. 5 eine zweite mögliche Ausbildung einer nicht erfindungsgemäßen Zug-Druck-Stange, in schaubildlicher Darstellung;
Fig. 6 die Zug-Druck-Stange nach Fig. 5, im Axialschnitt;
Fig. 7 eine erfindungsgemäße Zug-Druck-Stange im Axialschnitt;
Fig. 8 einen vergrößerten Ausschnitt der Zug-Druck-Stange aus Fig. 7;
Fig. 9 die erfindungsgemäße Zug-Druck-Stange in einer Explosionsdarstellung;
Fig. 10 ein Anschlussstück der in Fig. 10 dargestellte Zug-Druck-Stange;
Fig. 11 einen Ausschnitt aus der erfindungsgemäßen Zug-Druck-Stange im Viertelschnitt in einer ersten perspektivischen Darstellung;
Fig. 12 einen Ausschnitt aus der erfindungsgemäßen Zug-Druck-Stange im Viertelschnitt in einer zweiten perspektivischen Darstellung;
Fig. 13 einen perspektivischen Ausschnitt aus der erfindungsgemäßen Zug-Druck-Stange mit einem sich in Arretierstellung befindenden Schnappbolzen;
Fig. 14 einen perspektivischen Ausschnitt aus der erfindungsgemäßen Zug-Druck-Stange mit einem gelösten Schnappbolzen;
Fig. 15 eine perspektivische Detailansicht des Schnappbolzens aus Fig. 13 und Fig. 14.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

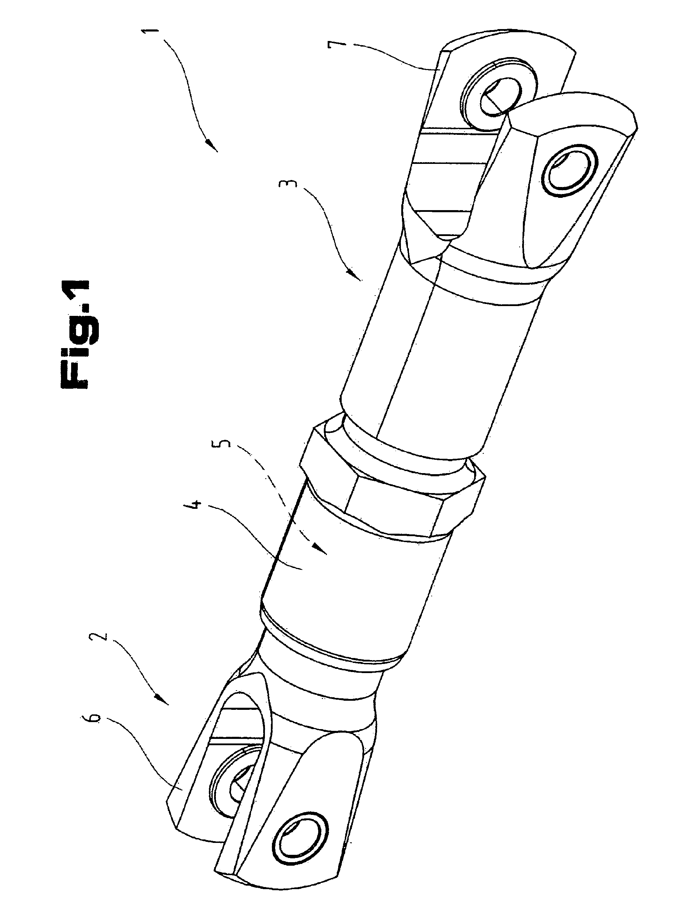

In den Fig. 1 bis 4 ist eine erste und gegebenenfalls für sich eigenständige Ausführungsform einer Zug-Druck-Stange 1 gezeigt, welche in modulartiger Bauweise ausgebildet ist und an beiden in Axialrichtung voneinander abgewendeten Enden jeweils eine Befestigungsvorrichtung 2, 3, ein zwischen diesen angeordnetes Anschlussstück 4 sowie zumindest eine Rastvorrichtung 5 umfasst.

Im hier gezeigten vorliegenden Ausführungsbeispiel weist die Zug-Druck-Stange 1 beidseits die in Axialrichtung voneinander distanzierten Befestigungsvorrichtungen 2, 3 auf, wobei hier beide jeweils ein Kupplungselement 6, 7 sowie einen daran angeordneten Schaft 8, 9 umfassen.
Die Rastvorrichtung 5 ist ihrerseits zwischen der ersten Befestigungsvorrichtung 2 und dem Anschlussstück 4 vorgesehen, um eine relative Dreh- bzw. Schwenkbewegung der Befestigungsvorrichtung 2 bezüglich dem Anschlussstück 4 nach der Justierung der Gesamtlänge der Zug-Druck-Stange 1 zu verhindern. Dazu weist die Rastvorrichtung 5 in axialer Richtung gesehen jeweils einander zugewendete sowie zusammenwirkende Rastelemente 10, 11 auf, welche mittels eines Federelementes 12 aneinander bzw. gegeneinander gedrückt sind. Beidseits des Federelements 12 können noch Distanz- bzw. Druckscheiben 13 angeordnet sein, um einen direkten Kontakt zwischen dem Federelement 12 und dem Rastelement 11 bzw. dem Anschlussstück 4 zu vermeiden. Diese Druckscheibe 13 kann aus einem Edelstahlmaterial hergestellt sein, um die Reibung zwischen dem Federelement 12 und dem Rastelement 11 bzw. dem Anschlussstück 4 zu minimieren, um einen direkten Kontakt mit Federelement 12 zu vermeiden.

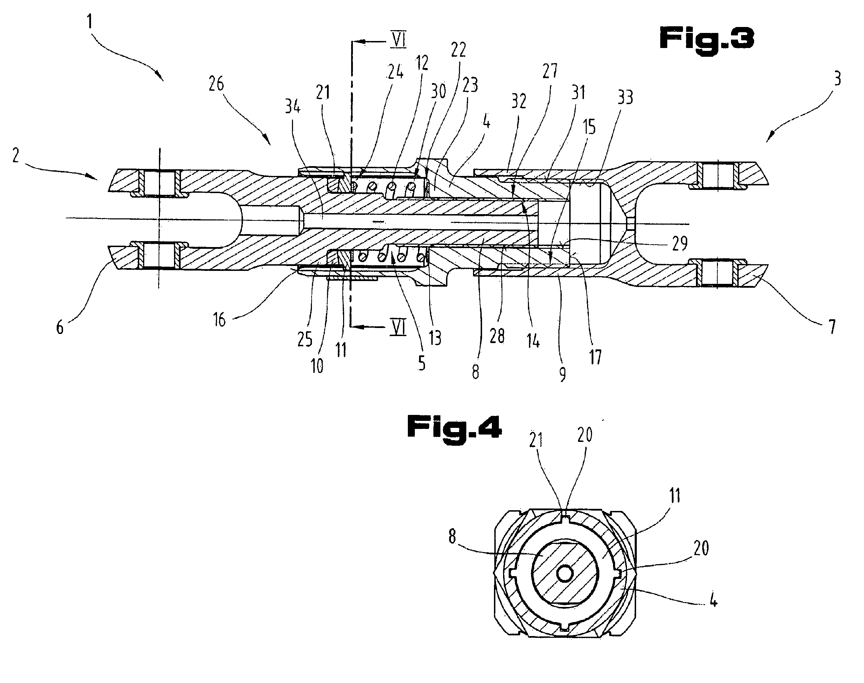

Weiters ist am besten aus der Fig. 3 zu ersehen, dass zwischen der Befestigungsvorrichtung 2, insbesondere deren Schaft 8, und dem Anschlussstück 4 eine Gewindeanordnung 14 vorgesehen ist. Eine weitere Gewindeanordnung 15 kann auch noch zwischen dem Schaft 9 der weiteren Befestigungsvorrichtung 3 und dem Anschlussstück 4 vorgesehen sein. Um eine gegenläufige Verstellung der beiden Befestigungsvorrichtungen 2, 3 relativ gegenüber dem Anschlussstück 4 zu erreichen, wird eine der beiden Gewindeanordnungen 14, 15 des Anschlussstücks 4 zur Verbindung mit einer der beiden Befestigungsvorrichtungen 2, 3 als Rechtsgewinde und die andere Gewindeanordnung als Linksgewinde ausgebildet. Durch die zueinander gegenläufig ausgebildeten Gewindeanordnungen 14, 15 bei einer gekuppelten Stellung der beiden Befestigungsvorrichtungen 2, 3 relativ gegenüber hier nicht näher dargestellten Bauteilen kann dann über Verdrehen des Anschlussstücks 4 relativ gegenüber den beiden Befestigungsvorrichtungen 2, 3 die Länge der gesamten Zug-Druck-Stange 1 einfach verändert werden. Sind beide vorgesehen und die Gewindeanordnungen 14, 15 mit einer gegenläufigen Steigung ausgebildet, kann so eine stufenlose Verstellung des Abstandes zwischen den Enden der Befestigungsvorrichtungen 2, 3 erfolgen. Da die Befestigungsvorrichtungen 2, 3 an den abzustützenden Bauteilen angelenkt bzw. damit gekuppelt sind, sind diese drehfest bezüglich des Anschlussstücks 4 gehalten. Durch die Verdrehung des Anschlussstücks 4 bzw. des später noch beschriebenen Mittelteils 35 relativ gegenüber den Befestigungsvorrichtungen 2, 3, erfolgt eine gewisse Ver- oder Vorspannung zwischen diesen Teilen über die Gewindeanordnungen 14, 15. Zur Erleichterung der Einleitung der Drehbewegung auf das Anschlussstück 4 kann an dessen Außenseite ein Hilfselement, z.B. ein Sechskant oder dgl., angeordnet sein.

Das Anschlussstück 4 weist seinerseits in Axialrichtung gesehen voneinander distanzierte Stirnenden 16, 17 auf, welche den beiden Befestigungsvorrichtungen 2, 3 zugewendet sind und jeweils zur Verbindung mit diesen dienen.

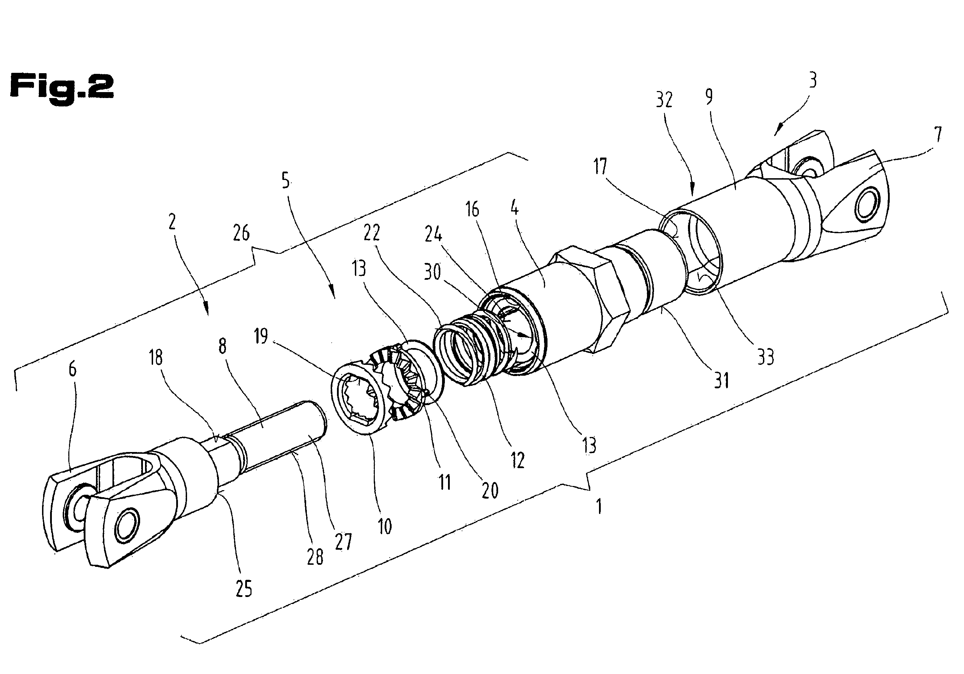

Das erste Rastelement 10 der Rastvorrichtung 5 ist seinerseits drehfest an der Befestigungsvorrichtung 2 angeordnet, wie dies am besten aus einer Zusammenschau der Fig. 2 und 3 zu ersehen ist. So ist es möglich, dass das erste Rastelement 10 entweder integraler Bestandteil der Befestigungsvorrichtung 2 ist oder durch einen eigenen Bauteil gebildet ist. So wäre es möglich, das Rastelement 10 beispielsweise in Art einer Zahnscheibe auszubilden, welche drehfest mit dem Schaft 8 der Befestigungsvorrichtung 2 gekuppelt ist. Durch die Ausbildung als Zahnscheibe weist das erste Rastelement 10 eine zentrale Öffnung auf, welche zur Aufnahme des Schaftes 8 dient. Bei entsprechender, gegenseitiger Passungswahl kann dies von einem leichten Spiel bis hin zu einem Presssitz führen. Die drehfeste Verbindung zwischen dem ersten Rastelement 10 und dem Schaft 8 kann beispielsweise dadurch erfolgen, dass am Schaft 8 eine Abflachung 18 angeordnet ist, welche mit einer entsprechenden Gegenfläche 19 am ersten Rastelement 10 zusammenwirkt und so die drehfeste Kupplung bzw. Verbindung erfolgt.

Das zweite Rastelement 11 ist hier ebenfalls in Form einer Zahnscheibe ausgebildet, ist jedoch um den Schaft 8 der ersten Befestigungsvorrichtung 2 frei drehbar. Um eine gegenseitige Verrastung der beiden Rastelemente 10 sowie 11 zu erzielen, ist das zweite Rastelement 11 seinerseits drehfest mit dem Anschlussstück 4 verbunden. Dazu weist das als Zahnscheibe ausgebildete Rastelement 11 an seinem äußeren Ende zumindest einen radial vorragenden Fortsatz 20 auf. Dieser Fortsatz 20 greift in eine nutförmig ausgebildete und sich in Axialrichtung erstreckende Ausnehmung 21 im Anschlussstück 4 ein. Bevorzugt sind über den Umfang gesehen mehrere Fortsätze 20 sowie dazu gegengleich ausgebildete Ausnehmungen 21 vorgesehen, um eine bessere und stabilere Kraftübertragung zu erzielen. Dabei können die Fortsätze 20 sowie die damit zusammenwirkenden Ausnehmungen 21 sowohl am Rastelement 11 als auch am Anschlussstück 4 angeordnet bzw. ausgebildet sein. Der Verdrehwinkel zwischen den beiden Rastelementen 10, 11 hängt von der Größe derselben ab. Sind Zahnscheiben gewählt, kann mit geringen Zahngrößen eine nahezu stufenlose Verstellung bei gleichzeitiger einrastender Stellung zwischen den beiden Rastelementen 10, 11 erzielt werden.

Unabhängig davon wäre es aber noch möglich, anstelle von Zähnen die Rastelemente 10, 11 mit einem Reibbelag oder dgl. zu versehen, wodurch eine noch feinere Einstellung der Gesamtlänge der Zug-Druck-Stange 1 erfolgen kann. Mit einer Art Mikrostruktur an beiden einander zugewendeten Oberflächen der Rastelemente 10, 11 kann dies ebenfalls erreicht werden.

Das Federelement 20 der Rastvorrichtung 5 ist mit seinem ersten Ende 22 an einer am Anschlussstück 4 ausgebildeten Stützschulter 23 und mit seinem zweiten Ende 24 am zweiten Rastelement 11 abgestützt. Somit sind beide zusammenwirkenden Rastelemente 10, 11 um den Schaft 8 der ersten Befestigungsvorrichtung 2 herum angeordnet. Das erste Rastelement 10 stützt sich seinerseits - da dies hier durch einen eigenen Bauteil gebildet ist - an einer Schulter 25 der Befestigungsvorrichtung 2 ab. Durch die Abstützung des Federelements 20 an der Stützschulter 23 und die dabei ausgewirkte Kraftrichtung auf die Rastelemente 10, 11 und in weiterer Folge auf die Befestigungsvorrichtung 2, erfolgt eine gegenseitige Verspannung der beiden Gewinde zwischen dem Schaft 8 und dem Anschlussstück 4. Dadurch kann eine Geräuschentwicklung bei Wechsellasten verringert bzw. überhaupt vermieden werden.

Die bevorzugt als Zahnscheiben ausgebildeten Rastelemente 10, 11 sind jeweils für sich unabhängig, drehfest an voneinander unterschiedlichen Bauteilen der Zug-Druck-Stange 1 angeordnet und zusätzlich durch das Federelement 12 gegeneinander verspannt. Zumindest eines der Rastelemente - im vorliegenden Ausführungsbeispiel das Ratelement 11 - ist in Axialrichtung bezüglich der Befestigungsvorrichtung 2 relativ dazu verstellbar, wodurch die Rastelemente 10, 11 die Drehbewegung der Befestigungsvorrichtung 2, 3 relativ bezüglich dem Anschlussstück 4 in einer Mehrzahl von Drehstellungen mit einer vorbestimmten Verriegelungskraft lösbar arretieren.

Das Anschlussstück 4, die erste Befestigungsvorrichtung 2 sowie die Rastvorrichtung 5 bilden eine gemeinsame und zusammengehörige Baugruppe 26 aus. Diese zusammengehörige Baugruppe 26 ist bei diesem Ausführungsbeispiel mit der weiteren Befestigungsvorrichtung 3 kombinierbar, wobei diese gemeinsam die komplette Zug-Druck-Stange 1 ausbilden.

Die zuvor beschriebene Gewindeanordnung 14 zwischen dem Anschlussstück 4 und der ersten Befestigungsvorrichtung 2 ist hier derart ausgebildet, dass ein Gewinde der Gewindeanordnung 14 zumindest an einem vom Kupplungselement 6 distanzierten Endabschnitt 27 des Schaftes 8 sowie ein weiteres Gewinde an der von der Rastvorrichtung 5 abgewendeten Seite der Stützschulter 23 im Anschlussstück 4 ausgebildet ist. Die Rastvorrichtung 5 ist ihrerseits zwischen der Stützschulter 23 und dem Kupplungselement 6 der ersten Befestigungsvorrichtung 4 angeordnet. Dabei ist das am Schaft 8 ausgebildete Gewinde als Außengewinde 28 ausgebildet. Das damit zusammenwirkende Gewinde des Anschlussstücks 4 ist dann als Innengewinde 29 ausgeführt.

Das Anschlussstück 4 weist weiters auf der dem Kupplungselement 6 zugewendeten Seite einen Aufnahmeraum 30 zur Aufnahme der Rastvorrichtung 5 auf. Damit durchragt der Schaft 8 die Rastvorrichtung 5 auf die vom ersten Kupplungselement 6 abgewendete Seite bzw. Richtung und erstreckt sich hin auf das der weiteren Befestigungsvorrichtung 3 zugewendete Stirnende 17. Um einen Schutz der Rastvorrichtung 5 innerhalb des Anschlussstück 4 zu gewährleisten, kann das dem Kupplungselement 6 der ersten Befestigungsvorrichtung 2 zugewendete Stirnende 16 die Rastvorrichtung 5 hin auf das Kupplungselement 6 übergreifen. Bei entsprechender, maßlicher Abstimmung zwischen dem Ende des Kupplungselements 6 und dem Aufnahmeraum 30 kann dort bei Wahl eines geringen Abstandes zwar eine gegenseitige Verdrehung der Befestigungsvorrichtung 2 relativ gegenüber dem Anschlussstück 4 erfolgen, jedoch ein Eindringen von Schmutz oder dergleichen erschwert bzw. überhaupt verhindert werden. So wäre es möglich im Bereich des Stirnendes 16 des Anschlussstücks 4 ein Dichtelement vorzusehen.

Zur Verbindung des Anschlussstücks 4 im Bereich seines Stirnendes 17 mit der weiteren Befestigungsvorrichtung 3, weist dieses auf der vom ersten Kupplungselement 6 der ersten Befestigungsvorrichtung 2 abgewendeten Seite ein Außengewinde 31 auf.

Ist zusätzlich zur Baugruppe 26 die weitere Befestigungsvorrichtung 3 vorgesehen, weist diese an ihrem dem Anschlussstück 4 zugewendeten Ende 32 ein Innengewinde 33 auf. Damit bilden das Außengewinde 31 mit dem damit zusammenwirkenden Innengewinde 33 die weitere Gewindeanordnung 15 aus. In vorliegenden Fall können sich die beiden Gewindeanordnungen 14 sowie 15 in Axialrichtung gesehen übergreifen, wobei das Anschlussstück 4 den gemeinsamen verbindenden Bauteil darstellt. Durch die gezielte Wahl der beiden Gewindeanordnungen 14, 15 und der dabei unterschiedlichen Ausbildung derselben zwischen den beiden Schäften 8, 9 - einmal als Außengewinde 28 am Schaft 8 und einmal als Innengewinde 33 im Schaft 9 - kann so eine sehr kurze Ausbildung der gesamten Zug-Druck-Stange 1 in deren Axialrichtung erfolgen.

Weiters ist noch aus der Fig. 3 zu ersehen, dass die Befestigungsvorrichtung 2, welche Bestandteil der gemeinsamen Baugruppe 26 ist, in Axialrichtung von einer Durchgangsöffnung 34 durchsetzt ist. Diese dient dazu, falls sich innerhalb der Zug-Druck-Stange 1 Kondenswasser bilden sollte, dass diese ungehindert ablaufen kann. Weiters kann die Durchgangsöffnung 34 auch noch zum Druckausgleich zwischen dem Innenraum und der äußeren Umgebung sowie zu Reduzierung des Gewichtes bzw. der Masse der Befestigungsvorrichtungen 2, 3 dienen.

Ferner ist ein Gewinde der Gewindeanordnung 14 zumindest an einem vom Kupplungselement 6 distanzierten Endabschnitt 27 des Schaftes 8 sowie ein weiteres Gewinde an der von der Rastvorrichtung 5 abgewendeten Seite der Stützschulter 23 im Anschlussstück 4 ausgebildet und die Rastvorrichtung 5 ist zwischen der Stützschulter 23 und dem Kupplungselement 6 angeordnet.

Außerdem ist das Gewinde des Schaftes 8 als Außengewinde 28 und das Gewinde des Anschlussstücks 4 als Innengewinde 29 ausgebildet.

Daneben weist das Anschlussstück 4 auf seiner dem Kupplungselement 6 zugewendeten Seite einen Aufnahmeraum 30 zur Aufnahme der Rastvorrichtung 5 auf.

Darüber hinaus übergreift das Anschlussstück 4 mit dem dem Kupplungselement 6 zugewendeten Stirnende 16 die Rastvorrichtung 5 hin auf das Kupplungselement 6.

Eines der beiden Gewinde 29, 31 des Anschlussstücks 4 ist zur Verbindung mit einer der beiden Befestigungsvorrichtungen 2, 3 als Rechtsgewinde und das andere Gewinde 31, 29 als Linksgewinde ausgebildet.

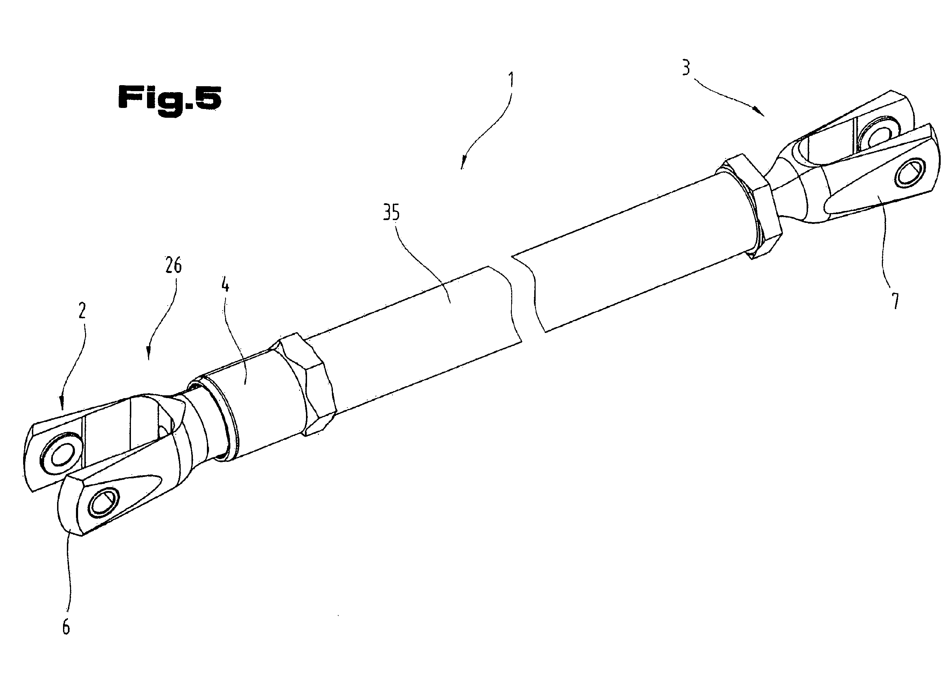

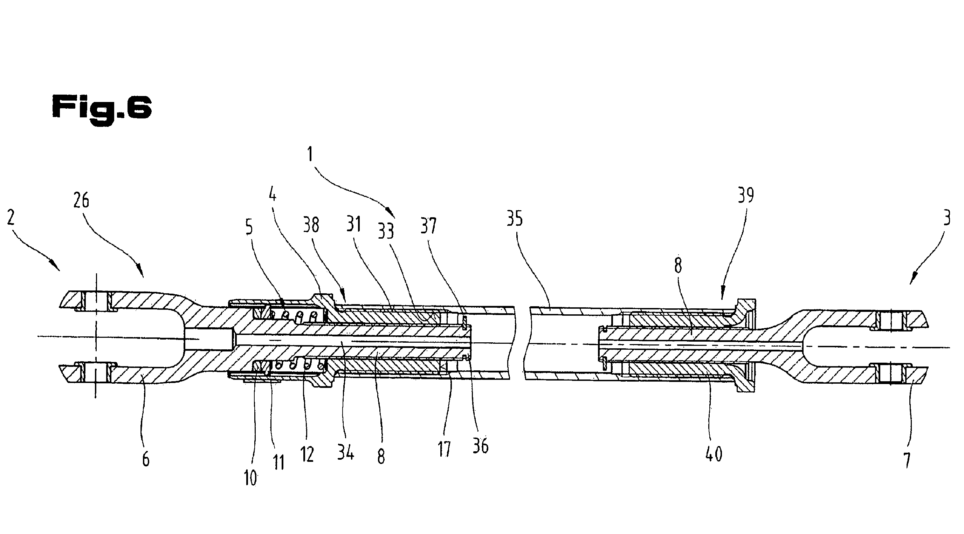

In den Fig. 5 und 6 ist eine weitere und gegebenenfalls für sich eigenständige Ausführungsform der Zug-Druck-Stange 1 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Diese hier dargestellte Zug-Druck-Stange 1 weist unter anderem als modularen Bauteil auch wieder die gemeinsame Baugruppe 26 an einem Ende 38 auf. Im Gegensatz zu der Ausführungsform gemäß den Fig. 1 bis 4 ist an dem Außengewinde 31 des Anschlussstücks 4 nicht direkt die weitere Befestigungsvorrichtung 3 damit verbunden, sondern zur Erzielung einer größeren, axialen Längserstreckung ein eigener Mittelteil 35 vorgesehen. Dieser kann rohrförmig ausgebildet sein, wobei an dem von der Baugruppe 26 abgewendeten, weiteren Ende 39 des Mittelteils 35 der Zug-Druck-Stange 1 die weitere Befestigungsvorrichtung 3 vorgesehen bzw. damit verbunden ist.

Der Aufbau und die Bauteile der gemeinsamen Baugruppe 26 entsprechen exakt jenem, wie dies bereits zuvor detailliert beschrieben worden ist. Deshalb wird hier, um unnötige Wiederholungen zu vermeiden, auf die detaillierte Beschreibung in den vorangegangenen Fig. 1 bis 4 hingewiesen und Bezug genommen.

Wie nun am besten aus der Fig. 6 zu ersehen ist, durchragt der Schaft 8 der ersten Befestigungsvorrichtung 2 das vom Kupplungselement 6 abgewendete Stirnende 17 des Anschlussstücks 4. Um ein unbeabsichtigtes, vollständiges Herausdrehen der Befestigungsvorrichtung 2 aus dem Anschlussstück 4 zu vermeiden, ist an einem Schaftende 36 zumindest ein radial vorragendes Anschlagelement 37 angeordnet und mit diesem verbunden. Dieses Anschlagelement 37 kann dabei beispielsweise als radial federnde Sicherungsscheibe für Wellen ausgebildet sein, welches in eine im Schaft 8 angeordnete Wellennut eingreift.

Der hier rohrförmig ausgebildete Mittelteil 35 weist in Axialrichtung gesehen, die voneinander distanzierte Enden 38, 39 auf. So ist hier im Bereich des ersten Endes 38 die zuvor beschriebene, gemeinsame Baugruppe 26 damit verbunden. Dies erfolgt bevorzugt über eine Gewindeverbindung, welche zusätzlich noch beispielsweise mit einem Haftmittel gegen ein unbeabsichtigtes Lösen gesichert ist. Es wäre aber auch eine andere Befestigungsmöglichkeit aus dem bekannten Stand der Technik möglich. Dies könnte z.B. auch durch eine form- und/oder stoffschlüssige Verbindung erfolgen.

Im Bereich des weiteren Endes 39 des Mittelteils 35 kann ebenfalls ein Innengewinde vorgesehen sein, wobei die weitere Befestigungsvorrichtung 3 entweder direkt mit diesem im Mittelteil 35 vorgesehenen Innengewinde in Eingriff stehen kann, oder aber auch unter Zwischenschaltung eines Zwischenstücks 40 damit verbunden ist. Das Zwischenstück 40 kann an seiner Außenseite ein Außengewinde aufweisen, welches mit dem im Bereich des Endes 39 angeordneten Innengewinde in Eingriff steht. So kann auch von einer Gewindehülse gesprochen werden, wenn das Zwischenstück 40 mit einem Innen- als auch einem Außengewinde versehen ist. Es wäre aber auch möglich, das Zwischenstück 40 auf jede andere beliebige Art und Weise mit dem Ende 39 des Mittelteils 35 zu verbinden bzw. daran zu haltern. Hier wären beispielsweise auch eine formschlüssige Halterung und/oder aber auch eine stoffschlüssige Verbindung, beispielsweise über eine Klebenaht oder dergleichen, denkbar. Dies ist aus dem Stand der Technik hinlänglich bekannt und es wird deshalb nicht mehr näher darauf eingegangen.

Die beiden Befestigungsvorrichtungen 2, 3 mit ihren Kupplungsvorrichtungen 6, 7 sind hier als gabelförmig ausgebildete Halterungen dargestellt, wobei es aber möglich ist, diese an die jeweiligen Anschlussbedingungen beliebig anzupassen.

Zur Erzielung einer gegensinnigen Verlängerung bzw. Verkürzung der gesamten Zug-Druck-Stange 1 sind auch bei dieser Ausbildung die Gewindeanordnungen der beiden Befestigungsvorrichtungen 2, 3 einmal durch ein Linksgewinde und einmal durch ein Rechtsgewinde auszubilden.

Ferner durchragt der Schaft 8 der ersten Befestigungsvorrichtung 2 das vom ersten Kupplungselement 6 abgewendete Stirnende 17 des Anschlussstücks 4 und an einem Schaftende 36 ist zumindest ein radial vorragendes Anschlagelement 37 angeordnet und mit dem Schaft 8 verbunden.

Außerdem kann die relative Verstellung des Anschlussstückes 4 oder des Mittelteils 35 bezüglich der beiden Befestigungsvorrichtungen 2, 3 stufenlos erfolgen.

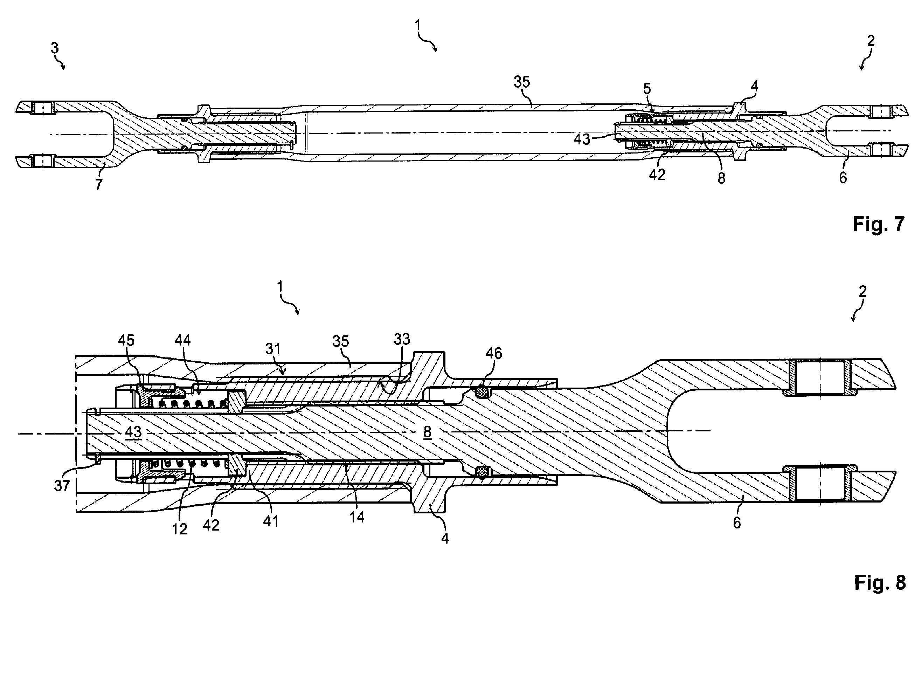

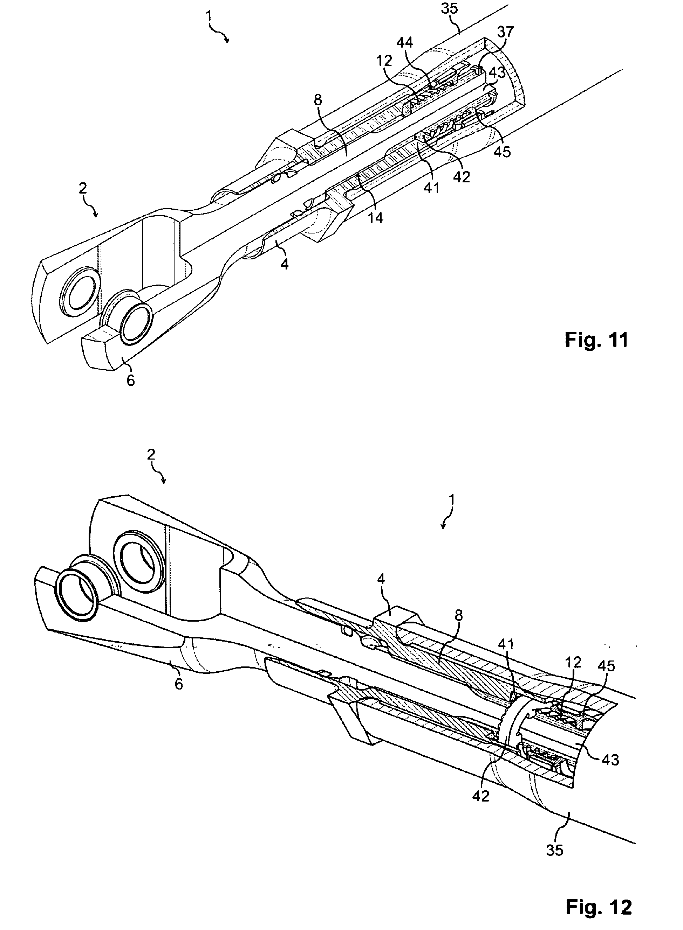

In den Fig. 7 bis 12 ist eine erfindungsgemäße Zug-Druck-Stange 1 gezeigt, wobei wiederum für gleiche Teile gleiche Bezugszeichen bzw. Bauteilbezeichnungen wie in den vorangegangenen Fig. 1 bis 6 verwendet werden. Um unnötige Wiederholungen zu vermeiden, wird auf die detaillierte Beschreibung in den vorangegangenen Fig. 1 bis 6 hingewiesen bzw. Bezug genommen.

Die in Fig. 7 bis 12 dargestellte Zug-Druck-Stange 1 weist ein Mittelteil 35, Befestigungsvorrichtungen 2, 3 mit jeweils einem Kupplungselement 6 bzw. 7 und einem daran angeordneten Schaft 8 bzw. 9 auf. Die Rastvorrichtung 5 besitzt in axialer Richtung gesehen jeweils einander zugewendeten sowie zusammenwirkenden ersten und zweiten Rastelementen 41, 42. Die Rastelemente 41, 42 werden mittels eines Federelements aneinander gedrückt. Im Gegensatz zu den vorhergehen beschriebenen Ausführungsformen ist hierbei das erste Rastelement 41 drehfest mit dem Anschlussstück 4 verbunden und das zweite Rastelement 42 ist drehfest an der Befestigungsvorrichtung 2 angeordnet. Ansonsten entsprechen das erste Rastelement 41 im Wesentlichen dem weiter oben beschriebenen Rastelement 10 und das zweite Rastelement 42 im Wesentlichen dem oben beschriebenen Rastelement 11 und können insbesondere als Zahnscheiben ausgebildet sein.

Der Schaft 8 ist über eine Gewindeanordnung 14 mit dem Anschlussstück 4 verbunden. Ferner ist das Anschlussstück 4 über eine weitere aus dem Innengewinde 33 und dem korrespondierenden Außengewinde 31 bestehende Gewindeanordnung mit dem Mittelteil 35 verbunden. Daneben weist das Anschlussstück 4 auf seiner dem Kupplungselement 6 abgewandten Seite einen Aufnahmeraum 44 auf. Dieser Aufnahmeraum 44 dient zur Aufnahme der Rasteinrichtung 5. An dessen dem Kupplungselement 6 abgewandten Seite wird der Aufnahmeraum 44 durch eine als Stützring 45 ausgebildete Stützschulter 23 zur Abstützung des ersten Endes des Federelements 12 begrenzt. In der in den Fig. 7 bis 12 beschriebenen Ausführungsform ist das Federelement 12 damit mit seinem ersten Ende 22 an dem Stützring 45 und mit seinem zweiten Ende 24 am zweiten Rastelement 42 abgestützt. Die Rastelemente 41, 42 arretieren auf diese Weise lösbar die Drehbewegung der Befestigungsvorrichtung 2 relativ bezüglich dem Anschlussstück 4 in einer Mehrzahl von Drehstellungen mit einer vorbestimmten Verriegelungskraft.

Der Schaft 8 weist auf seiner dem Kupplungselement 6 abgewandten Seite einen profilierten Schaftfortsatz 43 auf. Im vorliegenden Ausführungsbeispiel ist die Profilierung als Nute im Schaftfortsatz ausgebildet. Ferner ist das zweite Rastelement 42 ringförmig ausgebildet und weist ein Durchgangsloch auf, dessen Geometrie auf die Profilierung des Schaftfortsatzes 43 abgestimmt ist, sodass das zweite Rastelement 42 zum einen drehfest zum anderen axial verschiebbar am Anschlussstück 6 gelagert ist.

Der Stützring 45 ist durch eine Schnappverbindung mit dem dem Kupplungselement 6 abgewandten axialen Endbereich des Anschlussstückes 4 verbunden. Dabei durchragt der Schaftfortsatz 43 den Stützring 45, wobei die kreisförmige Innenöffnung des Stützrings 45 einen Durchmesser besitzt, der eine freie Beweglichkeit des Stützrings in axialer Richtung entlang Schaftfortsatzes 43 erlaubt.

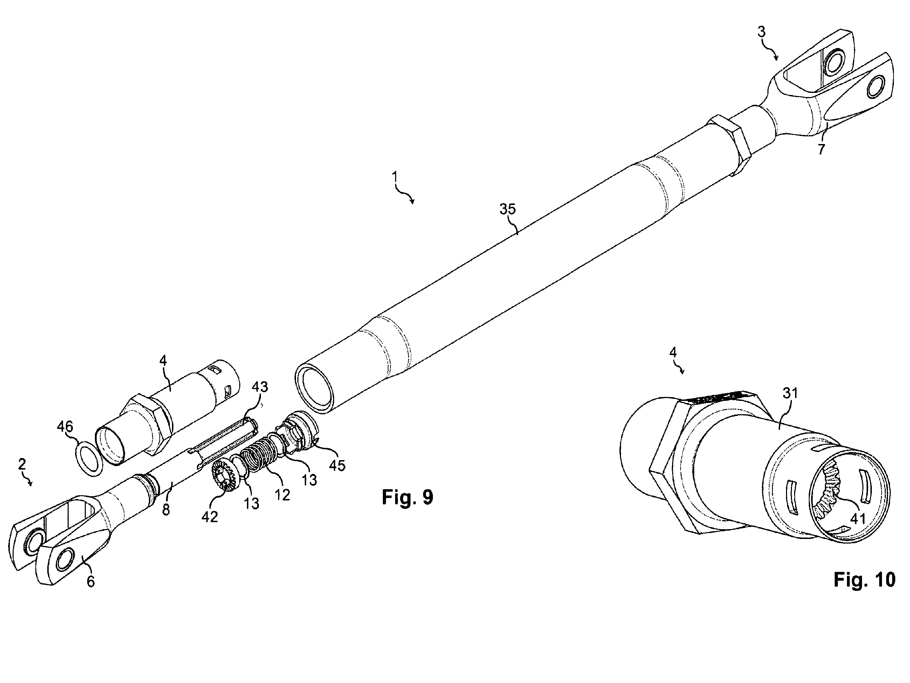

Das erste Rastelement 41 ist einstückig mit dem Anschlussstück 4 und bildet einen innenliegenden Wellenabsatz des Anschlussstückes 4. Wie insbesondere in Fig. 10 dargestellt, ist dieser innenliegende Wellenabsatz des Anschlussstücks 4 mit Zähnen versehen, sodass ein Zusammenwirken der beiden Rastelement 41, 42 die Drehbewegung der Befestigungsvorrichtung 2 relativ bezüglich dem Anschlussstück 4 in einer Mehrzahl von Drehstellungen mit einer vorbestimmten Verriegelungskraft lösbar arretiert wird.

Der profilierte Schaftfortsatz 43 durchragt den Aufnahmeraum 44 des Anschlussstücks 4 und am Schaftende 36 des Schafts 8 ist ein radial vorragendes Anschlagelement 37 angeordnet. Ferner ist zwischen dem Kupplungselement 6 und dem Anschlusselement 4 eine Dichtung 46 in Form eines Dichtringes angeordnet.

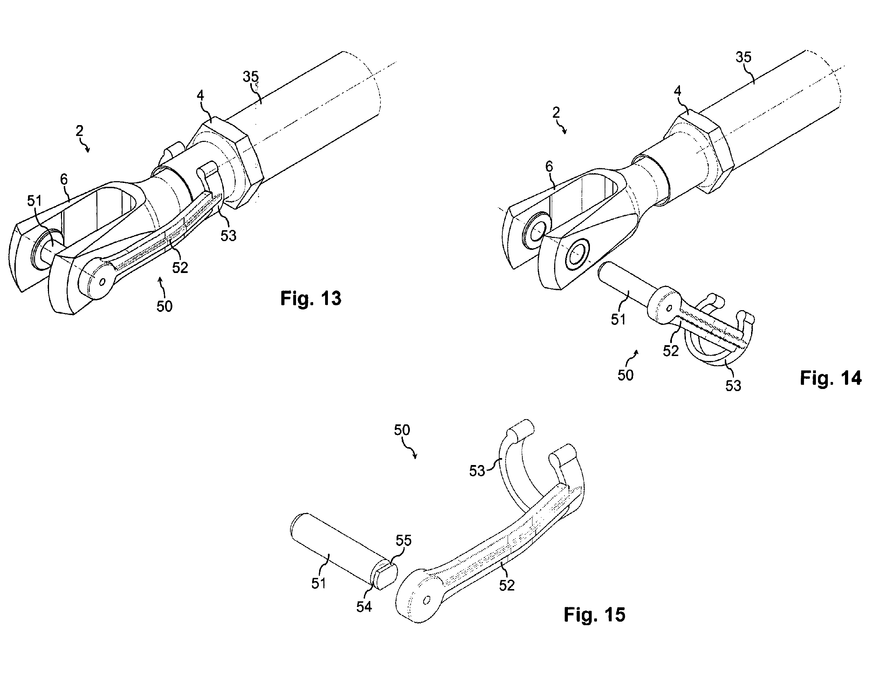

Fig. 13 zeigt einen perspektivischen Ausschnitt aus der erfindungsgemäßen Zug-Druck-Stange mit einem sich in Arretierstellung befindenden Schnappbolzen 50. Der Schnappbolzen 50 besteht aus einem Stift 51, einem Hebelarm 52 und einem Schnappring 53. Der Stift ist in die Ösen des Kupplungselementes 6 eingefügt. Der Schnappring 53 ist um den äußeren Umfang des Anschlussstückes 4 gelegt. Durch das Einschnappen des Schnapprings 53 ist der Bolzen 51 gesichert, sodass ein Lösen des Bolzens 51 aus den Ösen des Kupplungselements 6 zuverlässig verhindert wird. Der Stift 51 besteht aus Metall, insbesondere aus einem Edelstahlwerkstoff. Der Hebelarm 52 und der Schnappring 53 sind aus einem Kunststoff, insbesondere aus Polyamid, gefertigt. In vorteilhafter Weise werden hierbei der Hebelarm 52 und der Schnappring 53 einstückig hergestellt.

Fig. 14 zeigt den Schnappbolzen 50 in einer gelösten Stellung, d.h. der Bolzen 51 ist nicht in Ösen des Kupplungselementes 6 eingefügt und der Schnappring 53 ist nicht um das Anschlussstück 4 gelegt.

Fig. 15 zeigt eine perspektivische Detailansicht des Schnappbolzens 50. Der Hebelarm 52 und der Schnappring 53 sind einstückig ausgebildet. Der Bolzen 51 kann zur Verbindung mit dem Hebelarm 52 mit einem seiner axialen Enden in eine Vertiefung des Hebelarmes 52 eingesteckt werden. Die Vertiefung des Hebelarmes 52 ist in den Figuren nicht dargestellt. Die Verbindung zwischen Bolzen 51 und Hebelarm 52 erfolgt insbesondere durch eine am Bolzen 51 angebrachte Hinterschneidung 54, welche mit Einstecken des Bolzens in die korrespondierende Vertiefung des Hebelarmes 52 eine formschlüssige Verbindung zwischen Bolzen 51 und Hebelarm 52 entstehen lässt. Sowohl die Hinterschneidung 54 als auch die Abflachung 55 sind in einem axialen Endbereich des Bolzens 51 ausgebildet. Ferner ist am Bolzen 51 eine Abflachung 55 angebracht. Diese Abflachung 55 korrespondiert nach dem Einstecken des Bolzens 51 in die Vertiefung des Hebelarmes 52 mit einer entsprechend ausgebildeten Gegenform, sodass ein Verdrehen des Bolzens 51 relativ zum Hebelarm 52 zuverlässig verhindert und somit eine verdrehfeste Verbindung gebildet wird.

Die Ausführungsbeispiele zeigen mögliche Ausführungsvarianten der Zug-Druck-Stange 1 bzw. der gemeinsamen Baugruppe 26, wobei an dieser Stelle bemerkt sei, dass die Erfindung nicht auf die speziell dargestellten Ausführungsvarianten derselben eingeschränkt ist.

Der Ordnung halber sei abschließend darauf hingewiesen, dass zum besseren Verständnis des Aufbaus Zug-Druck-Stange 1 bzw. der gemeinsamen Baugruppe 26 diese bzw. deren Bestandteile teilweise unmaßstäblich und/oder vergrößert und/oder verkleinert dargestellt wurden.

### BEZUGSZEICHENLISTE

- 1: Zug-Druck-Stange
- 2: Befestigungsvorrichtung
- 3: Befestigungsvorrichtung
- 4: Anschlussstück
- 5: Rastvorrichtung
- 6: Kupplungselement
- 7: Kupplungselement
- 8: Schaft
- 9: Schaft
- 10: Rastelement
- 11: Rastelement
- 12: Rastelement
- 13: Druckscheibe
- 14: Gewindeanordnung
- 15: Gewindeanordnung
- 16: Stirnende
- 17: Stirnende
- 18: Abflachung
- 19: Gegenfläche
- 20: Fortsatz
- 21: Ausnehmung
- 22: Ende
- 23: Stützschulter
- 24: Ende
- 25: Schulter
- 26: Baugruppe
- 27: Endabschnitt
- 28: Außengewinde
- 29: Innengewinde
- 30: Aufnahmeraum
- 31: Außengewinde
- 32: Ende
- 33: Innengewinde
- 34: Durchgangsöffnung
- 35: Mittelteil
- 36: Schaftende
- 37: Anschlagelement
- 38: Ende
- 39: Ende
- 40: Zwischenstück
- 41: Rastelement
- 42: Rastelement
- 43: Schaftfortsatz
- 44: Aufnahmeraum
- 45: Stützring
- 46: Dichtung
- 50: Schnappbolzen
- 51: Stift
- 52: Hebelarm
- 53: Schnappring
- 54: Hinterschneidung
- 55: Abflachung

## Patentansprüche

1. Zug-Druck-Stange (1) umfassend zumindest eine
Befestigungsvorrichtung (2, 3) mit einem Kupplungselement (6, 7) und einem daran angeordneten Schaft (8, 9), zumindest ein Anschlussstück (4) mit in Axialrichtung voneinander distanzierten Stirnenden (16, 17), wobei die Befestigungsvorrichtung (2, 3) zur Längenveränderung der Zug-Druck-Stange (1) über eine Gewindeanordnung (14, 15) drehbar mit dem Anschlussstück (4) verbunden ist, eine Rastvorrichtung (5) mit in axialer Richtung gesehen jeweils einander zugewendeten sowie zusammenwirkenden ersten und zweiten Rastelementen (41, 42), welche mittels eines Federelements (12) aneinander gedrückt sind, wobei das erste Rastelement (41) der Rastvorrichtung (5) drehfest mit dem Anschlussstück (4) verbunden ist und das zweite Rastelement (42) drehfest an der Befestigungsvorrichtung (2) angeordnet ist, wobei das Federelement (12) mit seinem ersten Ende (22) an einer am Anschlussstück (4) ausgebildeten Stützschulter und mit seinem zweiten Ende (24) am zweiten Rastelement (42) abgestützt ist und dabei die Rastelemente (41, 42) die Drehbewegung der Befestigungsvorrichtung (2) relativ bezüglich dem Anschlussstück (4) in einer Mehrzahl von Drehstellungen mit einer vorbestimmten Verriegelungskraft lösbar arretieren,
**dadurch gekennzeichnet, dass**
das Anschlussstück (4) auf seiner dem Kupplungselement (6) abgewandten Seite einen Aufnahmeraum (44), der an dessen dem Kupplungselement (6) abgewandten Seite durch eine als Stützring (45) ausgebildete Stützschulter zur Abstützung des ersten Endes des Federelements (12) begrenzt wird, zur Aufnahme der Rastvorrichtung (5) aufweist.

2. Zug-Druck-Stange (1) nach Anspruch 1,
**dadurch gekennzeichnet, dass** das Anschlussstück (4) auf der vom Kupplungselement (6) abgewendeten Seite mit einem Außengewinde (31) versehen ist.

3. Zug-Druck-Stange (1) nach Anspruch 2,
**dadurch gekennzeichnet, dass** diese eine weitere Befestigungsvorrichtung (3) umfasst, wobei die weitere Befestigungsvorrichtung (3) an ihrem dem Anschlussstück (4) zugewendeten Ende (32) ein Innengewinde (33) aufweist, welches mit dem am Anschlussstück (4) ausgebildeten Außengewinde (31) drehbar verbunden ist und die beiden Gewinde (31, 33) eine weitere Gewindeanordnung (15) ausbilden.

4. Zug-Druck-Stange (1) nach einem der vorhergehenden Ansprüche, wobei der Schaft (8) auf seiner dem Kupplungselement (6) abgewandten Seite einen profilierten Schaftfortsatz (43) aufweist, durch dessen Profilierung das zweite Rastelement (42) drehfest und axial verschiebbar am Anschlussstück (6) gelagert ist.

5. Zug-Druck-Stange (1) nach einem der vorhergehenden Ansprüche, wobei der Schaft (8), insbesondere der profilierte Schaftfortsatz (43), den Aufnahmeraum (44) des Anschlussstücks (4) durchragt und an dessen Schaftende (36) zumindest ein radial vorragendes Anschlagelement (37) angeordnet ist.

6. Zug-Druck-Stange (1) nach einem der vorhergehenden Ansprüche, wobei das erste Rastelement (41) einstückig mit dem Anschlussstück (4), insbesondere als innenliegender Wellenabsatz, ausgebildet ist.

7. Zug-Druck-Stange (1) nach einem der vorhergehenden Ansprüche, wobei der Stützring (45) durch eine Klebe- oder Schnappverbindung mit dem dem Kupplungselement (6) abgewandten axialen Endbereich des Anschlussstückes (4) verbunden ist.

8. Zug-Druck-Stange (1) nach einem der vorhergehenden Ansprüche, mit einen an das Kupplungselement (6, 7) anbringbaren Schnappbolzen (50), welcher einen metallischen Stift (51) sowie einen jeweils aus Kunststoff, insbesondere Polyamid, bestehenden Hebelarm (52) und Schnappring (53) aufweist.

9. Zug-Druck-Stange (1) nach Anspruch 8, wobei der Stift (51) an einem seiner axialen Endbereiche eine Hinterschneidung (54) und eine Abflachung (55) aufweist.

## Claims

1. Push-pull rod (1) comprising at least one fastening device (2, 3) with a coupling element (6, 7) and with a shank (8, 9) arranged on said coupling element, at least one connection piece (4) with face ends (16, 17) at a distance from one another in an axial direction, wherein, for variation of the length of the push-pull rod (1), the fastening device (2, 3) is rotatably connected via a thread arrangement (14, 15) to the connection piece (4), a detent device (5) having first and second detent elements (41, 42) which in each case face toward and interact with one another as viewed in the axial direction and which are pressed against one another by means of a spring element (12), wherein the first detent element (41) of the detent device (5) is connected in a rotationally conjoint manner to the connection piece (4) and the second detent element (42) is arranged in a rotationally conjoint manner on the fastening device (2), wherein the spring element (12) is supported with its first end (22) on a support shoulder formed on the connection piece (4) and with its second end (24) on the second detent element (42), and here, the detent elements (41, 42) releasably latch the rotational movement of the fastening device (2) relative to the connecting piece (4) in a multiplicity of rotational positions with a predetermined locking force,
**characterized in that** the connection piece (4) has, on its side facing away from the coupling element (6), a receiving space (44) which serves for receiving the detent device (5) and which is delimited, on its side facing away from the coupling element (6), by a support shoulder, which is formed as a support ring (45), for supporting the first end of the spring element (12).

2. Push-pull rod (1) according to Claim 1, **characterized in that** the connection piece (4) is provided with an external thread (31) on the side facing away from the coupling element (6).

3. Push-pull rod (1) according to Claim 2, **characterized in that** it comprises a further fastening device (3), wherein the further fastening device (3) has, on its end (32) facing toward the connection piece (4), an internal thread (33) which is rotatably connected to the external thread (31) formed on the connection piece (4), and the two threads (31, 33) form a further thread arrangement (15).

4. Push-pull rod (1) according to one of the preceding claims, wherein the shank (8) has, on its side facing away from the coupling element (6), a profiled shank projection (43), by means of the profiling of which the second detent element (42) is mounted in a rotationally conjoint and axially displaceable manner on the connection piece (6).

5. Push-pull rod (1) according to one of the preceding claims, wherein the shank (8), in particular the profiled shank projection (43), protrudes through the receiving space (44) of the connection piece (4), and at least one radially projecting stop element (37) is arranged on the shank end (36) of said shank.

6. Push-pull rod (1) according to one of the preceding claims, wherein the first detent element (41) is formed in one piece with the connection piece (4), in particular as an internal shaft shoulder.

7. Push-pull rod (1) according to one of the preceding claims, wherein the support ring (45) is connected by means of an adhesive or snap-action connection to that axial end region of the connection piece (4) which faces away from the coupling element (6).

8. Push-pull rod (1) according to one of the preceding claims, having a snap-action bolt (50) which can be attached to the coupling element (6, 7) and which has a metallic pin (51) and which also has a lever arm (52) and snap-action ring (53) composed in each case of plastic, in particular polyamide.

9. Push-pull rod (1) according to Claim 8, wherein the pin (51) has, on one of its axial end regions, an undercut (54) and a flattening (55).

## Revendications

1. Barre de traction-compression (1) comprenant au moins un dispositif de fixation (2, 3) avec un élément d'accouplement (6, 7) et un arbre (8, 9) disposé sur celui-ci, au moins une pièce de raccordement (4) avec des extrémités frontales (16, 17) espacées les unes des autres dans la direction axiale, le dispositif de fixation (2, 3), pour la variation de longueur de la barre de traction-compression (1), étant connecté par le biais d'un agencement fileté (14, 15) de manière rotative à la pièce de raccordement (4), un dispositif d'encliquetage (5) avec, vus dans la direction axiale, des premiers et deuxièmes éléments d'encliquetage (41, 42) à chaque fois tournés l'un vers l'autre et coopérant l'un avec l'autre, qui sont pressés l'un contre l'autre au moyen d'un élément de ressort (12), le premier élément de ressort (41) du dispositif d'encliquetage (5) étant connecté de manière solidaire en rotation à la pièce de raccordement (4) et le deuxième élément d'encliquetage (42) étant disposé de manière solidaire en rotation sur le dispositif de fixation (2), l'élément de ressort (12) étant supporté par sa première extrémité (22) sur un épaulement de support réalisé sur la pièce de raccordement (4) et par sa deuxième extrémité (24) sur le deuxième élément d'encliquetage (42), et les éléments d'encliquetage (41, 42) bloquant en l'occurrence le mouvement de rotation du dispositif de fixation (2) de manière relative par rapport à la pièce de raccordement (4) dans une pluralité de positions de rotation, avec une force de verrouillage prédéterminée et de manière desserrable, **caractérisée en ce que**
la pièce de raccordement (4) présente, sur son côté opposé à l'élément d'accouplement (6), un espace de réception (44), qui est limité au niveau de son côté opposé à l'élément d'accouplement (6) par un épaulement de support réalisé sous forme de bague de support (45) pour supporter la première extrémité de l'élément de ressort (12), en vue de recevoir le dispositif d'encliquetage (5).

2. Barre de traction-compression (1) selon la revendication 1,
**caractérisée en ce que** la pièce de raccordement (4) est pourvue sur le côté opposé à l'élément d'accouplement (6) d'un filetage extérieur (31).

3. Barre de traction-compression (1) selon la revendication 2,
**caractérisée en ce que** celle-ci comprend un dispositif de fixation supplémentaire (3), le dispositif de fixation supplémentaire (3) présentant à son extrémité (32) tournée vers la pièce de raccordement (4) un filetage interne (33) qui est connecté de manière rotative au filetage extérieur (31) réalisé sur la pièce de raccordement (4) et les deux filetages (31, 33) constituent un agencement fileté supplémentaire (15).

4. Barre de traction-compression (1) selon l'une quelconque des revendications précédentes, dans laquelle l'arbre (8) présente, sur son côté opposé à l'élément d'accouplement (6), un prolongement d'arbre profilé (43), grâce au profilage duquel le deuxième élément d'encliquetage (42) est monté de manière solidaire en rotation et déplaçable axialement sur la pièce de raccordement (6).

5. Barre de traction-compression (1) selon l'une quelconque des revendications précédentes, dans laquelle l'arbre (8), en particulier le prolongement d'arbre profilé (43), traverse l'espace de réception (44) de la pièce de raccordement (4) et au moins un élément de butée saillant radialement (37) est disposé sur son extrémité d'arbre (36).

6. Barre de traction-compression (1) selon l'une quelconque des revendications précédentes, dans laquelle le premier élément d'encliquetage (41) est réalisé d'une seule pièce avec la pièce de raccordement (4), en particulier sous forme de retrait d'arbre situé à l'intérieur.

7. Barre de traction-compression (1) selon l'une quelconque des revendications précédentes, dans laquelle la bague de support (45) est connectée par une connexion par collage ou encliquetage à la région d'extrémité axiale de la pièce de raccordement (4) opposée à l'élément d'accouplement (6).

8. Barre de traction-compression (1) selon l'une quelconque des revendications précédentes, comprenant un boulon d'encliquetage (50) pouvant être monté sur l'élément d'accouplement (6, 7), qui présente une goupille métallique (51) ainsi qu'un bras de levier (52) et une bague d'encliquetage (53) constitués chacun de plastique, notamment de polyamide.

9. Barre de traction-compression (1) selon la revendication 8, dans laquelle la goupille (51) présente sur l'une de ses régions d'extrémité axiale une contre-dépouille (54) et un méplat (55).
